# EUROPÄISCHE PATENTSCHRIFT

(11) **EP 1 658 454 B1**
(45) Veröffentlichungstag und Bekanntmachung des Hinweises auf die Patenterteilung: **05.03.2008**
(21) Anmeldenummer: 04739215.4
(22) Anmeldetag: 15.05.2004
(51) Int. Cl.: F16H 61/02, F16H 59/54, B60T 8/88, B60W 30/18

(54) **VERFAHREN ZUM ABBREMSEN EINES FAHRZEUGS**
BRAKING METHOD FOR A VEHICLE
PROCEDE POUR RALENTIR UN VEHICULE

(30) Priorität: 14.06.2003 DE 10326839
(43) Veröffentlichungstag der Anmeldung: 24.05.2006
(73) Patentinhaber: ZF FRIEDRICHSHAFEN Aktiengesellschaft, 88038 Friedrichshafen (DE)
(72) Erfinder: POPP, Christian, 88079 Kressbronn (DE); SCHIELE, Peter, 88079 Kressbronn (DE); SCHWEMER, Christian, 88048 Friedrichshafen (DE); GIERER, Georg, 88079 Kressbronn (DE); STEINHAUSER, Klaus, 88079 Kressbronn (DE); ALLGAIER, Bernd, 88079 Kressbronn (DE)
(86) Internationale Anmeldenummer: PCT/EP2004/005235
(87) Internationale Veröffentlichungsnummer: WO 2004/110804

(56) Entgegenhaltungen:
- EP-A- 1 145 927
- DE-A- 10 129 067
- US-A- 3 631 950
- US-A- 3 994 374
- US-A- 4 309 918

## Beschreibung

Die vorliegende Erfindung betrifft ein Verfahren zum Abbremsen eines Fahrzeugs gemäß dem Oberbegriff des Patentanspruchs 1, der aus US 43099/8A oder US 363/9550A bekannt ist.

Die immer steigende Komplexität von Automatgetrieben, automatisierten Handschaltgetrieben, stufenlosen Getrieben, Doppelkupplungsgetrieben oder sonstigen sicherheitsrelevanten Aggregaten stellt immer höhere Ansprüche an die entsprechenden Diagnose- und Überwachungssysteme. Hierbei sollen Diagnose- und Überwachungssysteme primär den Personenschutz bzw. die Fahrsicherheit gewährleisten; ein weiteres Ziel ist die Gewährleistung der Fahrzeugverfügbarkeit sowie des Schutzes des Getriebes und dessen Komponenten.

Gerade bei den sogenannten X-by-Wire-Systemen, bei denen der Fahrer z. T. nicht mehr direkt in das System eingreifen kann, nimmt die Anforderung an die Sicherheit immer mehr zu. Insbesondere bei X-by-Wire-Systemen, muss die Automobilindustrie nach verschiedenen Normen wie z. B. DIN 19250 oder DIN V 0801 vorgehen, da derartige Systeme nicht dem Stand der Technik entsprechen. Dies bedeutet einen hohen Aufwand an Prüf- und Überwachungssoftware mit ihren entsprechenden Sicherungs- und Ersatzfunktionen.

Der vorliegenden Erfindung liegt die Aufgabe zugrunde, ein Verfahren zum Abbremsen eines Fahrzeugs als Sicherungs- und Ersatzfunktion bei Ausfall der Fahrzeugbetriebsbremse, insbesondere der X-by-Wire-Bremse eines Kraftfahrzeugs anzugeben, welches ein sicheres Abbremsen in bestimmten Notsituationen gewährleistet.

Diese Aufgabe wird durch die Merkmale des Patentanspruchs 1 gelöst. Weitere vorteilhafte Varianten ergeben sich aus den Unteransprüchen.

Demnach wird ein Verfahren zum Abbremsen eines Fahrzeugs vorgeschlagen, bei dem das Abbremsen des Fahrzeugs mit Hilfe des Getriebes über ein definiertes Schalten von Reibschaltelementen (Getriebekupplungen oder Getriebebremsen) bis zum Stillstand erfolgt, wobei die hierbei vorliegende Schaltelementkombination nicht einer Schaltlogik eines normalen Fahrgangs entspricht.

Bei Erkennen des Ausfalls der FahrzeugBetriebsbremse, beispielsweise der E-Bremse (X-by-Wire-Bremse), durch eine oder mehrere Überwachungsfunktionen und bei betätigtem Bremspedal das Fahrzeug über das Getriebe wird gezielt verzögert. Um einen größtmöglichen Bremsgradienten des Fahrzeugs zu erhalten, wird in dem Getriebe ausgehend von dem aktuell geschalteten Gang in vorteilhafter Weise mindestens ein zusätzliches Reibelement des Getriebes zugeschaltet, welches nicht zu der Schaltlogik der eingelegten Gangs gehört. Die hierdurch eintretende Abbremswirkung für das Fahrzeug wird also nicht durch eine bei Ausfall der Fahrzeugbetriebsbremse eingeleitete Rückschaltung erzielt, sondern durch ein definierte Verspannung des Getriebes. Dies kann bis zum Stillstand erfolgen. Im oder nahe dem Fahrzeugstillstand kann anschließend automatisch eine Parksperre des Getriebes oder auch automatisch eine Parkbremse des Fahrzeugs eingelegt werden. Dem Fachmann ist klar, dass hierfür seitens des Getriebes bzw. seitens des Fahrzuges eine entsprechende Aktuatorik vorgesehen sein muß, seitens des Getriebes beispielsweise eine E-Schaltung (shift-by-wire) mit einer elektrischen Wirkverbindung zwischen dem Bedienelement (Wählhebel) des Getriebes im Fahrzeuginnenraum und der Parksperre im Getriebe.

Vorzugsweise ist dieses gegenüber der normalen Schaltlogik zusätzlich geschaltete Reibschaltelement eine Bremse (Lamellenbremse, Bandbremse, ...), die innerhalb des Getriebes oder am Abtrieb des Getriebes angeordnet ist.

Zum Abbremsen des Fahrzeugs bei Ausfall der Fahrzeugbetriebsbremse wird der Kraftfluß im Getriebe also definiert überbestimmt, indem über eine Software-Funktion der das Moment bzw. der Schaltdruck an diesem gegenüber der normalen Schaltlogik zusätzlich geschalteten Reibelement geregelt wird, vorzugsweise derart, dass die Antriebsräder des Fahrzeugs maximal oder entsprechend einer Vorgabe verzögert werden. Dabei sollen die Antriebsräder des Fahrzeugs jedoch nicht blockieren, solange die tatsächliche Fahrzeuggeschwindigkeit noch nicht bis auf einen definierten Wert nahe Stillstand abgesunken ist. Der sich einzustellende Schaltdruck bzw. das sich einzustellende Moment kann als Funktion der Bremspedalbetätigungskraft und/oder des ACC-Radarsensors (Abstandsregelanlage) und/oder der tatsächlichen Fahrzeugverzögerung bestimmt werden.

Das zusätzliche Abbremsen des Fahrzeugs durch Einstellen eines definierten Moments/Schlupfs an dem gegenüber der normalen Schaltlogik zusätzlich geschalteten Reibelement führt zwangsweise zu einer erhöhten Verlustleistung an diesem beteiligten Reibelement, was im schlimm-sten Fall zur Schädigung führen kann. Aus diesem Grunde wird optional über eine weitere Funktion zwischen Notbremsung (Schädigung des Getriebes im Extremfall) und Normalbremsung unterschieden.

Im Rahmen einer besonders vorteilhaften Variante der vorliegenden Erfindung erfolgt eine Umschaltung auf ein weiteres, zuvor nicht geschaltetes zweites Reibschaltelement des Getriebes, wenn die thermische Grenzbelastung des ersten zur Getriebeverblockung zugeschalteten Reibelementes erreicht ist, so dass eine Schädigung des Getriebes vermieden wird. Es kann auch vorgesehen sein, dass in einen anderen (höheren oder niedrigeren) Gang geschaltet wird, wenn in dieser Notsituation des Fahrzeugs die thermische Grenzbelastung des ersten zur Getriebeverblockung zugeschalteten Reibelementes erreicht ist, damit eine andere Kupplungskombinationen zur Getriebeverblockung zum Einsatz kommen kann, um das Fahrzeug gezielt zu verzögern

Eine weitere Ausgestaltung der Erfindung sieht vor, dass das Fahrzeug durch Ansteuern zweier Reibschaltelemente (insbesondere Bremsen) im Getriebe oder durch ein separates Reibschaltelement am Abtrieb des Getriebes zusätzlich oder alternativ verzögert werden kann, wobei das Zuschalten dieser beiden Bremsen bzw. dieses separaten Schaltelementes nicht einer Schaltlogik bzw. Schaltelementkombination eines normalen Fahrgangs entspricht.

Das erfindungsgemäße Verfahren beschränkt sich nicht auf den Einsatz in Lastschaltgetrieben; es kann bei stufenlosen Getrieben, automatisierten Schaltgetrieben und Doppelkupplungsgetrieben zur Anwendung kommen.

## Patentansprüche

1. Verfahren zum Abbremsen eines Fahrzeugs als Sicherungs- und Ersatzfunktion bei Ausfall einer Fahrzeugbetriebsbremse, insbesondere einer X-by-Wire-Bremse des Kraftfahrzeugs,
- wobei das Abbremsen des Fahrzeugs mit Hilfe des Getriebes über ein definiertes Schalten von Reibschaltelementen bis zum Stillstand erfolgt und die Kombination der bei Ausfall der Fahrzeugbetriebsbremse geschalteten Reibschaltelemente nicht der Schaltlogik eines Gangs im normalen Fahrbetrieb des Fahrzeugs entspricht,
- und wobei ausgehend von dem bei Ausfall der Fahrzeugbetriebsbremse geschalteten Gang, mindestens ein zusätzliches Reibschaltelement des Getriebes derart zugeschaltet wird, dass die Antriebsräder des Fahrzeugs maximal oder anhand einer Vorgabe verzögert werden, die Antriebsräder des Fahrzeugs jedoch nicht blockieren, solange eine aktuelle Fahrzeuggeschwindigkeit größer ist als ein definierter Wert,
**dadurch gekennzeichnet,**
- **dass** ein Schaltdruck oder ein Moment an dem gegenüber der normalen Schaltlogik ersten zusätzlich zugeschalteten Reibschaltelement geregelt wird,
- wobei der sich einzustellende Schaltdruck bzw. das sich einzustellende Moment als Funktion der Bremspedalbetätigungskraft und/oder eines ACC-Radarsensors, bzw. Abstandsregelanlage.; und/oder einer tatsächlichen Fahrzeugverzögerung bestimmt wird.

2. Verfahren zum Abbremsen eines Fahrzeugs nach Anspruch 1, **dadurch gekennzeichnet, dass** das Fahrzeug sofort bei Erkennen des Ausfalls der Fahrzeugbetriebsbremse über das Getriebe automatisch abgebremst wird.

3. Verfahren zum Abbremsen eines Fahrzeugs nach Anspruch 1, **dadurch gekennzeichnet, dass** das Fahrzeug bei des Ausfalls der Fahrzeugbetriebsbremse über das Getriebe automatisch abgebremst wird, wenn ein Bremspedal des Fahrzeugs betätigt ist.

4. Verfahren zum Abbremsen eines Fahrzeugs nach einem der vorangehenden Ansprüche, **dadurch gekennzeichnet, dass** in Abhängigkeit der aktuellen Fahrzeuggeschwindigkeit jeweils eine Schaltelementekombination geschaltet wird, in der eine optimale oder maximale Fahrzeugverzögerung bei möglichst geringer Belastung des Getriebes bzw. der Reibschaltelemente des Getriebes erreicht wird.

5. Verfahren zum Abbremsen eines Fahrzeugs nach einem der vorangehenden Ansprüche, **dadurch gekennzeichnet, dass** eine Umschaltung auf ein gegenüber der normalen Schaltlogik zusätzliches zweites Reibschaltelement des Getriebes erfolgt, wenn die thermische Grenzbelastung des gegenüber der normalen Schaltlogik zugeschalteten ersten Reibelementes erreicht ist.

6. Verfahren zum Abbremsen eines Fahrzeugs nach einem der vorangehenden Ansprüche, **dadurch gekennzeichnet, dass** ein Umschalten in einen höheren oder tieferen Gang mit anderer Reibschaltelement-Kombinationen erfolgt, wenn die thermische Grenzbelastung des gegenüber der normalen Schaltlogik zugeschalteten ersten Reibelementes erreicht ist.

7. Verfahren zum Abbremsen eines Fahrzeugs nach einem der vorangehenden Ansprüche, **dadurch gekennzeichnet, dass** das Fahrzeug durch Ansteuern zweier Reibschaltelemente im Getriebe oder durch ein separates Reibschaltelement am Abtrieb des Getriebes zusätzlich oder alternativ verzögert wird.

8. Verfahren zum Abbremsen eines Fahrzeugs nach einem der vorangegangenen Ansprüche, **dadurch gekennzeichent, dass** im oder nahe dem Stillstand des Fahrzeugs automatisch eine Parksperre des Getriebes oder/und automatisch eine Parkbremse des Fahrzeugs eingelegt wird.

9. Verwendung des Verfahrens zum Abbremsen eines Fahrzeugs nach einem der vorangegangenen Ansprüche, zum Abbremsen eines Fahrzeugs umfassend ein Lastschaltgetriebe, ein stufenloses Getriebe, ein automatisiertes Schaltgetriebe oder ein Doppelkupplungsgetriebe.

## Claims

1. Method for braking a vehicle as a safety and replacement function in the event of failure of a vehicle service brake, in particular an X-by-wire brake of the motor vehicle,
- wherein the braking of the vehicle takes place by means of the transmission via a defined engagement of frictional shift elements until the vehicle is at a standstill, and the combination of frictional shift elements engaged when the vehicle service brake fails does not correspond to the shift logic of a gear in the normal driving mode of the vehicle,
- and wherein, starting from the gear engaged when the vehicle service brake fails, at least one additional frictional shift element of the transmission is engaged in such a way that the drive wheels of the vehicle are slowed down to a maximum degree or to a preset degree, but the drive wheels of the vehicle do not lock while a current speed of the vehicle is greater than a defined value,
**characterised in that**
- a shifting pressure or a torque on the first additionally engaged frictional shift element compared to the normal shift logic is adjusted,
- wherein the shifting pressure or torque to be set is determined as a function of the brake pedal actuation force and/or an ACC radar sensor or distance control unit and/or an actual slowing-down of the vehicle.

2. Method for braking a vehicle according to claim 1, **characterised in that** the vehicle is braked automatically via the transmission immediately upon detection of failure of the vehicle service brake.

3. Method for braking a vehicle according to claim 1, **characterised in that**, in the event of failure of the vehicle service brake, the vehicle is braked automatically via the transmission when a brake pedal of the vehicle is actuated.

4. Method for braking a vehicle according to one of the preceding claims, **characterised in that**, depending on the current speed of the vehicle, in each case a combination of shift elements is engaged in which an optimal or maximum slowing-down of the vehicle is achieved while placing as small a load as possible on the transmission and frictional shift elements of the transmission.

5. Method for braking a vehicle according to one of the preceding claims, **characterised in that** a switchover to an additional second frictional shift element of the transmission compared to the normal shift logic takes place when the thermal load limit of the first frictional element engaged compared to the normal shift logic is reached.

6. Method for braking a vehicle according to one of the preceding claims, **characterised in that** a switchover to a higher or lower gear with a different combination of frictional shift elements takes place when the thermal load limit of the first frictional element engaged compared to the normal shift logic is reached.

7. Method for braking a vehicle according to one of the preceding claims, **characterised in that** the vehicle is additionally or alternatively slowed down by actuating two frictional shift elements in the transmission or by a separate frictional shift element at the output of the transmission.

8. Method for braking a vehicle according to one of the preceding claims, **characterised in that** a parking lock of the transmission and/or a parking brake of the vehicle is engaged automatically when the vehicle is at a standstill or almost at a standstill.

9. Use of the method for braking a vehicle according to one of the preceding claims, for braking a vehicle comprising a power shift transmission, a continuously variable transmission, an automatic transmission or a dual clutch transmission.

## Revendications

1. Procédé pour freiner un véhicule, opérant en tant que fonction de sécurité et de secours en cas de défaillance d'un frein de service du véhicule, en particulier d'un frein X-by-wire du véhicule automobile,
- dans lequel le freinage du véhicule s'effectue à l'aide de la transmission, par un actionnement défini d'éléments de commande à friction, jusqu'à l'arrêt, et où la combinaison des éléments de commande à friction qui sont actionnés lors de la défaillance du frein de service du véhicule ne correspond pas à la logique de commande d'engagement d'une vitesse dans la marche normale du véhicule,
- et dans lequel, en partant de la vitesse engagée lors de la défaillance du frein de service du véhicule, au moins un élément de commande à friction supplémentaire de la transmission est actionné de manière que les roues motrices du véhicule soient ralenties au degré maximum ou en respectant une prescription, mais de manière que les roues motrices du véhicule ne se bloquent pas tant qu'une vitesse actuelle du véhicule est plus grande qu'une valeur définie,
**caractérisé en ce que**
- une pression d'actionnement, ou un couple sur le premier élément de commande à friction actionné en supplément de la logique de commande normale, est régulée,
- la pression d'actionnement qui doit s'établir, ou le couple qui doit s'établir, étant alors déterminée en fonction de la force d'actionnement de la pédale de frein et/ou en fonction d'un capteur de radar ACC d'un équipement de régulation de la distance et/ou en fonction d'une décélération effective du véhicule.

2. Procédé pour freiner un véhicule selon la revendication 1, **caractérisé en ce que** le véhicule est automatiquement freiné par l'intermédiaire de la transmission aussitôt que la défaillance du frein de service du véhicule est détectée.

3. Procédé pour freiner un véhicule selon la revendication 1, **caractérisé en ce que**, lors de la défaillance du frein de service du véhicule, le véhicule est freiné automatiquement par l"intermédiaire de la transmission lorsqu'une pédale du frein du véhicule est actionnée.

4. Procédé pour freiner un véhicule selon l'une des revendications précédentes, **caractérisé en ce que**, en fonction de la vitesse actuelle du véhicule, il s'établit une combinaison d'éléments de commande dans laquelle on obtient une décélération optimale ou maximale du véhicule en même temps qu'une sollicitation de la transmission, ou des éléments de commande à friction de la transmission, aussi réduite que possible.

5. Procédé pour freiner un véhicule selon l'une des revendications précédentes, **caractérisé en ce qu**'il se produit un basculement sur un deuxième élément de commande à friction de la transmission en supplément de la logique de commande normale lorsque la sollicitation thermique limite du premier élément de friction actionné à la différence de la logique de commande normale est atteinte.

6. Procédé pour freiner un véhicule selon l'une des revendications précédentes, **caractérisé en ce qu**'il se produit un passage à une vitesse plus haute ou plus basse, avec d'autres combinaisons d'éléments de commande à friction, lorsque la sollicitation thermique limite du premier élément de friction actionné à la différence de la logique de commande normale est atteinte.

7. Procédé pour freiner un véhicule selon l'une des revendications précédentes, **caractérisé en ce que** le véhicule est ralenti en supplément ou en remplacement par la commande de deux éléments de commande à friction dans la transmission, ou par un élément de commande à friction séparé prévu sur la sortie de la transmission.

8. Procédé pour freiner un véhicule selon l'une des revendications précédentes, **caractérisé en ce que**, à l'état d'arrêt du véhicule, ou dans le voisinage de cet état d'arrêt, un verrouillage de stationnement de la transmission et/ou un frein de stationnement du véhicule est ou sont automatiquement enclenchés.

9. Application du procédé pour freiner un véhicule selon l'une des revendications précédentes, pour freiner un véhicule, comprenant une transmission à passage des rapports en charge, une transmission à variation continue, une boîte de vitesses automatisée ou une transmission à double embrayage.
